# EUROPEAN PATENT SPECIFICATION

(11) **EP 0 805 385 B1**
(45) Date of publication and mention of the grant of the patent: **30.09.1998**
(21) Application number: 97830149.7
(22) Date of filing: 28.03.1997
(51) Int. Cl.: B25J 13/02, G06K 11/08

(54) **Manually operable device for remote control of the displacement of a movable body with respect to a fixed reference, in particular for driving a robot**
Handbediente Einrichtung zur Fernsteuerung der Bewegung eines Gegenstandes in Beziehung auf eine feste Referenz, insbesondere eines Roboters
Dispositif de commande manuelle pour le contrôle à distance du déplacement d'un corps par rapport à une référence fixe, en particulier d'un robot

(30) Priority: 30.04.1996 IT TO960341
(43) Date of publication of application: 05.11.1997
(73) Proprietor: COMAU S.p.A., 10095 Grugliasco (Torino) (IT)
(72) Inventor: Costamagna, Daniele, 10095 Grugliasco, Torino (IT)
(74) Representative: Notaro, Giancarlo

(56) References cited:
- EP-A- 0 593 047
- DE-A- 3 810 054
- FR-A- 2 297 698

## Description

The present invention relates to a manually operable device for remote control of the displacement of a movable body with respect to a fixed reference, in particular for driving a robot, wherein said robot is displaceable with respect to said reference by motor means which are controlled by said device. In particular the invention relates to a device of the type set forth in the pre-characterizing portion of claim 1. A device of this type is known from DE-A-3 810 054.

The device according to the invention is particularly for use for manually driving a robot during a programming stage. By "programming stage" of an industrial robot, the stage is meant in which the user manually teaches to the robot the path that will have to be repeated automatically by the robot in order to carry out a determined operation. Typically, when carrying out this programming stage, reference is made to a predetermined point of the robot and specifically to the so-called "Tool Center Point" (TCP), which identifies the position of the tool mounted on the robot wrist. This point is suitably defined by the user depending upon the application and generally represents the portion of the tool which carries out the operation. For instance, in the case of an arch-welding operation, the TCP is positioned on the tip of the welding torch at the end of the welding wire; for sealing applications, the TCP is located at the end nozzle from which the sealant is emitted; for electric spot welding operations, the TCP may be located at one of the two welding electrodes or at an intermediate point therebetween.

The aforesaid programming stage has a short duration, if compared with the overall working time of a robot throughout its life. However, this stage is the only one to require a direct involvement of the user. Therefore, a reduction in the programming time heavily affects the cost of the set up operation of a robot. This aspect has been neglected in the past generations of robots, since robot technology was relatively new for mass industrial applications, so that it was accepted that the programming stage was requiring the use of specialized personnel 1 and the consumption of some time. Recently, however, the robot is more and more considered as a simple component of a more complex production line. The programmers have no specific knowledge and are usually trained in training courses of only same days. In this situation, the robot must be a tool simple to use and the programming stage must be necessarily short.

Most part of the programming time is dedicated to positioning the robot at the points of the path ("jog"). To this end a programming terminal (teach pendant) is provided, connected to the robot control cabinet. It may be composed for example by a liquid crystal display and a keyboard which is used for programming and driving the movement of the robot. The programming terminal is connected to the robot controller, for example by a long wire which enables the user to stay in proximity to the work area of the robot.

In order to carry out the programming stage, the various robot manufacturers nowadays mainly use two methods. A first method provides for the use of two pairs of buttons on the programming terminal, in order to define the components along which the robot TCP must be displaced. In a second method, there is provided a joystick-type device, of an analogic type, i.e. constituted by a lever which is displaceable in the various directions, which is used for defining both the direction of displacement of the TCP and the speed of this displacement. However, these joystick-type devices define only two components of the movement, so that it is necessary to add the possibility for the lever of rotating around its axis in order to provide a further degree of freedom to the joystick.

In recent years also other solutions for programming the robot have been tested, by making use of force sensors directly mounted on a tool coupling flange on the robot wrist. The user carries the tool to the required point by moving it manually. These known solutions have not encountered a great enthusiasm for various problems that they involve, among which there is the cost, the safety for the user and the difficulty of application in some situations, in which the TCP cannot be reached by the user.

The object of the present invention is that of providing a manually operable device for controlling the displacement of a movable body with respect to a fixed reference, in particular for driving a robot, in which said body is displaceable with respect to said reference by motor means which are controlled by said device, which is able to render the driving operation of the movement of the movable body and in particular the operation for programming a robot by the user extremely rapid, easy and intuitive.

According to the invention, this object is achieved by a device as set forth in Claim 1.

In an exemplary embodiment, the device comprises a support, which can be grasped with the hand which is not engaged in grasping the shuttle, on which the shuttle is rotatably mounted both around a first axis, or yaw axis, and around a second axis, or pitching axis, which intersect the first axis orthogonal thereto. The shuttle is mounted on the support so as to be able to rotate by at least 360° around both said axes. Furthermore, in the preferred embodiment, at one end of the shuttle there are provided two sliders arranged side-by-side, for driving the translation of the movable body in the two opposite ways, respectively, along the direction set by orienting the shuttle. Yet in this preferred embodiment, on one side of the shuttle there is provided a further slider for controlling the speed of rotation of the movable body in both directions around the axis defined by orienting the shuttle.

Therefore, in the device according to the invention, the direction and speed controls are completely separate from each other. The direction can be controlled simply by orienting the shuttle in the direction along which the movable body is to be displaced. To this end, the shuttle may have for example an elongated body or reference signs on its body in order to univocally define a single main direction.

In the case of application to programming of a robot, the device according to the invention enables to the user to move the robot without removing is gaze from the latter, so as to provide a continuos feed-back by the user to the path control. Studies carried out by the applicant have shown that the device according to the invention is easy to use and requires a reduced training time for the user.

As indicated, the shuttle must be oriented with its main direction along the direction on which the TCP must be displaced. Naturally, in order to obtain the proper movement, the position of the device according to the invention must be related in same way to a reference system which is fixed with respect to the robot. This can be obtained by a device calibration starting operation which can be carried out in an extremely simple and rapid way. However, a very accurate calibration is not absolutely necessary for the proper operation of the device according to the invention, since the displacement direction can be continuously corrected by the user without stopping the robot, by moving the shuttle; therefore, once the feed-back mechanism between user and robot has been initiated, the absolute direction of the device is not so important for the operation any longer. The problem in practice exists mainly at first start when, in the absence of a calibration, it is not possible to foresee the robot movement. Even in this case, however, it must be taken into account that, with the speed control, it is possible to start the robot at a very low speed so that in this stage it is possible to determine the proper direction of the shuttle even if initially the shuttle is not exactly parallel to the displacement direction, i.e. even in case of a non correct calibration.

As to the calibration, theoretically three data are necessary for completely describing the position of the shuttle with respect to the robot, since three are the components which define the orientation in space of the shuttle. However, in practice it is not difficult for the user to keep the shuttle support in a substantially vertical position, so as to reduce the number of components which is necessary to set to a single value: in practice only the angle formed by the shuttle around the yaw axis must be defined. The proper value of this angle must not be inserted by the user manually, but can be assigned by a semi-automatic calibration operation. This can be carried out in different ways, but two ways are mentioned herein as examples: one of mechanical type and one software-type. The mechanical calibration method consists in providing a ring nut around the joint used for the swivel coupling around the yaw axis, which causes a displacement of the reference of the coupling transducer. The user will have to align an evident reference sign on the ring nut with a known direction with respect to the robot which can be easily identified. The position of the reference sign will help the user to understand when a recalibration operation is necessary. The software calibration method consists instead in providing the shuttle with a calibration button in a position such as to prevent a non-voluntary depression thereof. The button will have to be depressed when the shuttle has been oriented in a known direction with respect to the robot.

The invention will be now described with reference to the annexed drawings, given purely by way of non limiting example, in which:
figure **1** is a diagrammatic perspective view of an embodiment of the device according to the invention,
figures **2, 3** are a plane view and a side view of the device of figure 1,
figure **4** shows a possible rotation of the shuttle forming part of the device of figure 1,
figure **5** is a perspective diagrammatic view which shows the use of the device according to the invention,
figures **6, 7** are two further perspective diagrammatic views which show the various operations which must be carried out by the device according to the invention in order to cause a predetermined displacement of the robot,
figure **8** is a diagrammatic perspective view of a further embodiment of the device according to the invention, in a first operating condition,
figure **9** is a view of the device of figure 8 in a second condition of use, and
figure **10** is a diagram which shows a control system of a robot including the device according to the invention.

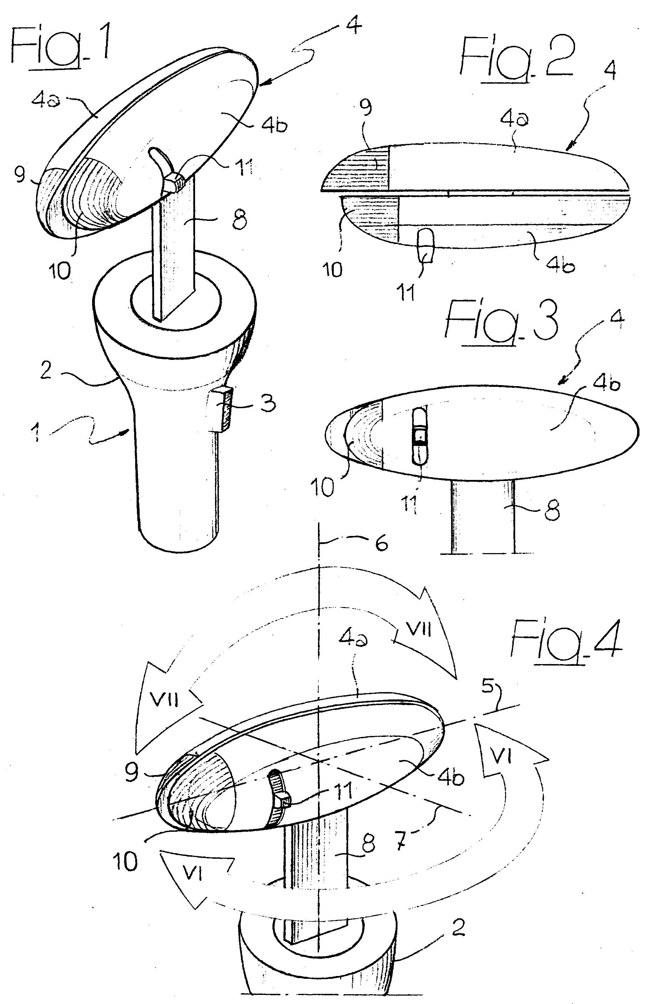

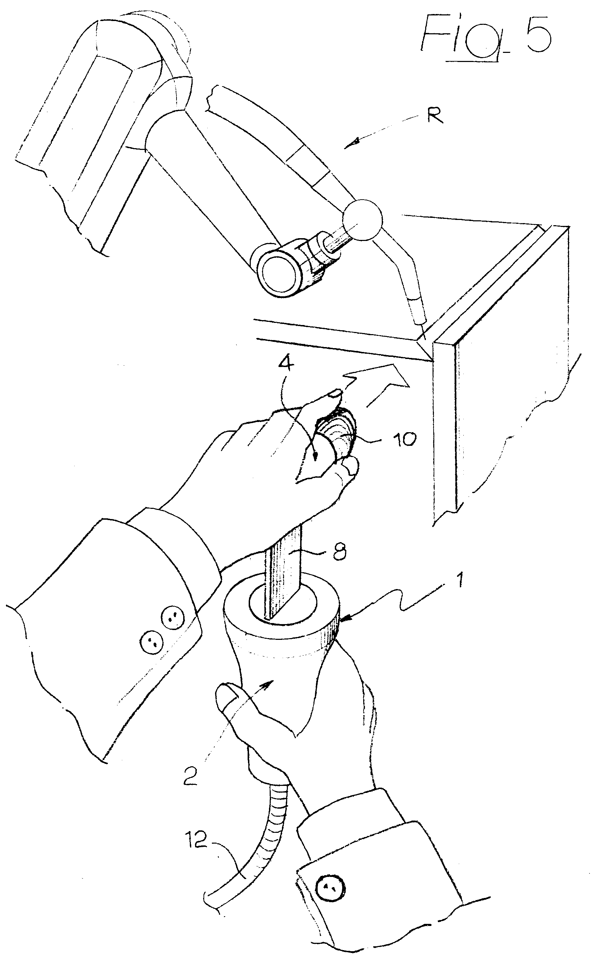

With reference to figures 1 - 4, reference numeral 1 generally designates a manually operable device for driving the displacement of a robot during a programming stage. The device 1 comprises a support 2, which, in the example illustrated in these figures, is in form of an elongated handle which is to be grasped by the user with one hand (figure 5) keeping it in a substantially vertical position. In the illustrated example, the handle 2 has a safety button 3 which must be kept depressed during use of the device, in order to enable the actuation of the robot.

On support 2 there is mounted a shuttle 4 which has an elongated body defining an axis 5 (figure 4) and rotatable by at least 360° both around an axis 6 (arrows VI), or yaw axis, and around an axis 7 (arrows VII) or pitching axis.

Yet in the case of the illustrated example, the body of shuttle 4 has two sections 4a, 4b which are separated by a longitudinal slit but rigidly connected to each other. The separation enables the body to be mounted on a vertical supporting blade 8, with the two sections 4a, 4b arranged at the two sides of blade 8, so that the whole body 4 of the shuttle is able to rotate by at least 360° around the pitching axis 7.

As already indicated above, by rotating the shuttle 4 around the two axes 6, 7, it is possible to position the main axis 5 of the shuttle along any direction in space. As it will become apparent from the following description, the device is such that it is able to cause a translation of a predetermined point of the robot, typically the TCP, along the direction on which the axis 5 is oriented and/or a rotation of the tool carried by the robot around this direction. In order to control the speed of the above indicated translation or rotation, sliders are correspondingly provided on body 4 of the shuttle. In particular, on one end of the body of the shuttle two sliders 9, 10 are arranged side-by-side, which respectively control the speed of forward displacement and the speed of backward displacement along the direction set by orienting the body of shuttle 4 in space. Furthermore, on one side of the body of the shuttle 4, there is provided a slider 11, whose displacement in the two opposite directions starting from a rest position causes corresponding rotation in opposite directions around the set direction. The amount of displacement of sliders 9, 10, 11 determines the speed of displacement of the robot.

Therefore, in the device according to the invention, the control of the direction of displacement of the robot (be it either a translation or a rotation) is completely separate from the control of the speed of this displacement.

As diagrammatically shown in figure 10, the device 1 is connected, for example by a cable 12 (emerging from the lower end of handle 2) to the control cabinet 13 of robot R.

The device according to the invention is further provided with sensor means 14 adapted to detect the amount of rotation of body 4 of the shuttle around axis 6, sensor means 15, adapted to detect the amount of rotation of body 4 of the shuttle around axis 7, sensor means 16 of the amount of displacement of sliders 9, 10 which control the translation speed and sensor means 17 adapted to detect the amount of displacement of slider 11 which controls the speed of rotation.

The details of construction of these sensor means are not described and illustrated herein, since they can be made in any known way and they do not fall, taken alone, within the scope of the invention. Furthermore, the deletion of these details from the drawings render the latter easier to understand. For the same reason, no detailed discussion is presented here on the connection between device 1 and controller 13 and between controller 13 and robot R.

Due to the detection of the rotations of shuttle 4 around axes 6, 7, which is carried out by sensors 14, 15, the electronic control means associated with the control cabinet 13 are able to detect the orientation in space of shuttle 4. As already indicated above, it is naturally necessary to preliminary carry out a calibration operation in order to set the position of the device with respect to the robot. As also indicated already, since the user keeps support 2 in a substantially vertical position, the aforesaid calibration operation can be carried out by only setting a single parameter, i.e. the value of the angle around the yaw axis. As also indicated already, the proper value of this angle must not be introduced by the user manually, but can be set by a semi-automatic calibration operation which can be carried out in the ways already described.

The detection of the displacement of sliders 9, 10, 11 by sensor means 16, 17 enables the electronic control means 13 to drive the displacement of the robot R at a speed which is a function of the displacement of the aforesaid sliders.

The information relating to the above mentioned rotations and slider displacements are numerical data with a minimum value, a maximum value and a measuring unit. In order to adapt these values to be used by the robot controller 13, it is necessary to define a minimum granulosity and a scanning time in order to transform these numbers into discrete quantities (for example one may choose to represent the position of the shuttle around the respective rotation axes with a granulosity of one sexagesimal degree for each 50-100 milliseconds). From the hardware standpoint, this information can be obtained by position/voltage transducers; the voltage can then be sampled and translated into numerical information by an A/D converter and sent to the robot controller 13 through a serial channel.

Figures 5 - 7 diagrammatically show the use of the device according to the invention for programming the robot in order to carry out an arch-welding operation.

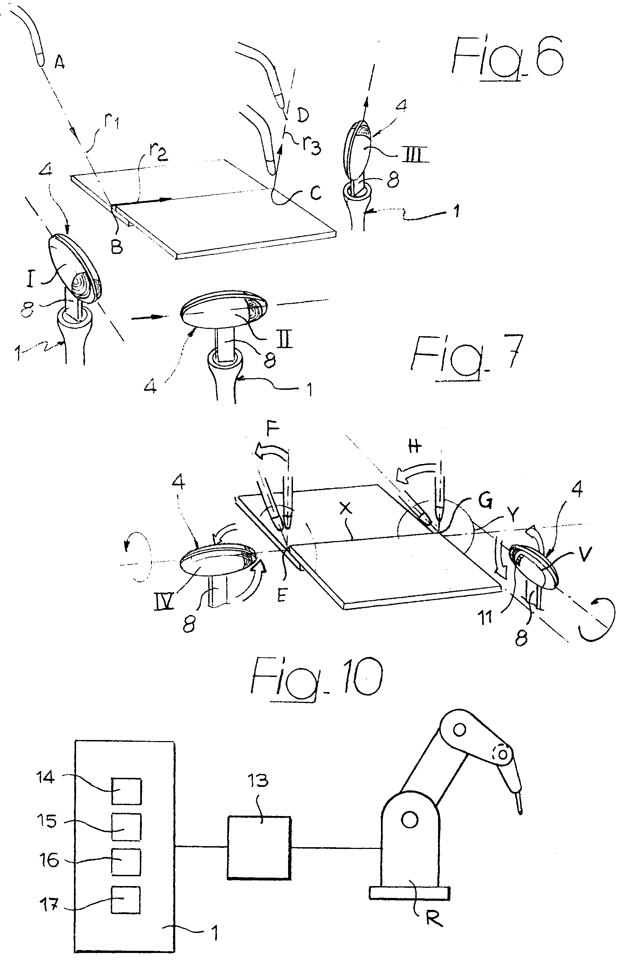

With reference to figure 6, the TCP of a robot R is initially moved closer to the pieces to be welded by causing it to follow a straight path r₁ starting from a point A up to a point B. This displacement is obtained by orienting the shuttle 4 as shown at I and depressing the forward displacement slider 9 for controlling at each moment the displacement speed of the robot, so as to determine a starting acceleration, an intermediate stage and a final deceleration. Once it is at B, the robot is displaced up to C to carry out the welding, along path r₂ (shuttle at position II), whereupon the robot is moved away from the welded pieces by causing it to follow a path r₃ to as to reach the point D (shuttle at position III).

Figure 7 shows an example of variation of the attitude of the robot. In this case, when the TCP is at a position E, the side slider 11 of the shuttle is actuated (position IV) to cause a rotation by an angle F of the tool carried by the robot. This rotation is carried out around an axis X corresponding to the orientation of the longitudinal axis of the body of the shuttle. Also in figure 7, when the TCP is at a position G, the robot can be rotated around an axis Y perpendicular to axis X, after that the shuttle has been oriented in position V, with axis 5 of the shuttle parallel to axis Y, by actuating the side slider 11, so as to cause a rotation H of the tool carried by the robot.

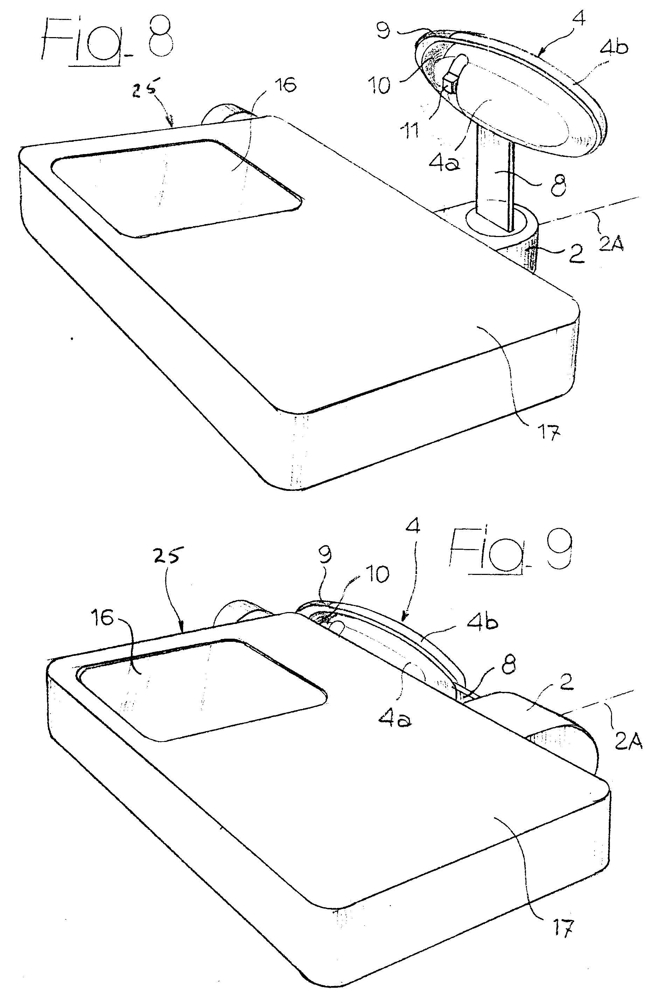

Figure 8 shows an embodiment of the invention in which the support of the shuttle 4 is constituted by an appendage of the conventional panel 25 constituting the programming terminal of the robot, having a liquid crystal display 16 and a keyboard 17. In this case, the support 2 is rotatable around an axis 2A (figure 9) with respect to the body of the programming terminal 25, to enable the shuttle to be arranged in a rest condition, when it is not used, on one side of the terminal.

As it is clearly apparent from figure 5, the use of the device according to the invention is extremely easy, since it is possible to grasp the device (either the handle 2 in the case of the embodiment of figure 1, or the programming in terminal 25, in the case of the embodiment of figure 8) by one hand, whereas the other hand grasps the body 4 of the shuttle, which preferably has a configuration suitable for a confortable and easy grip. More specifically, the forward displacement button 9 is at a position convenient for the forefinger, and the button 10 driving translation into the opposite direction can be actuated with the middle finger or the forefinger itself, the slider 11 for driving the rotation being at a position accessible for the thumb. The possibility of rotation by more then 360° around the yaw and pitching axes enables the shuttle to be adapted both for being gripped by the right hand and by the left hand.

Naturally, the shape of the shuttle might also be different from that shown purely by way of example. For instance, the shuttle might have a body with a less pronounced elongation, and enlarged at its middle portion, to provide an easier grip, the main direction of the body being defined, if necessary, also by reference signs formed on the body itself. Furthermore, the body might be devided for example into three separate sections, rather than in two sections, as in the illustrated example, these three sections being supported by two parallel blades similar to blade 8 of the annexed drawings, with the central section interposed between the two blades and the two side sections arranged on the outer side thereof. In this case, the forward displacement slider might be carried on one end of the central section, whereas the backward translation slider might be carried by one of the two side sections.

Due to the above described features, as indicated already, the user can control the robot during the programming stage by the device according to the invention, without removing his gaze from the robot, so as to be able to correct the robot path immediately.

The controls of the direction of displacement (translation and rotation) and the speed of this displacement are completely separate, which further simplifies driving by the user.

Naturally, while the principle of the invention remains the same, the details of construction and the embodiments may widely vary with respect to what has been described and illustrated purely by way of example, without departing from the scope of the present invention. For example, theoretically it is possible to delete support 2 entirely. In this case, the body of the shuttle would be completely free to be oriented in any way by the user. Naturally, in this case sensor means would be required able to detect the orientation of the body of the shuttle in space.

Furthermore, although the main use of the invention relates to the robot field, possible uses within the field of CAD and virtual reality applications are not excluded. More generally, it is possible to apply the invention to all cases in which there is a body movable with respect to a fixed reference by motor means. The manually operable device according to the invention enables these motor means to be controlled so as to provide a remote drive of the displacement of the movable body, according to the methods which have been described above.

In general, therefore, the invention may be applied to any case in which the operator must require the displacement of a reference system with respect to a fixed position. In the field of a CAD applications, the perspective representation of an object can be moved in space to be examined under different points of view. In virtual reality applications, various objects can be picked up and moved freely with high precision. The separation between translation and rotation controls helps the operator to avoid undesired displacements. Because of this feature, applications are not excluded also to driving of load moving machines (cranes or gantries).

## Claims

1. Manually operable device for controlling the displacement of a body movable with respect to a fixed reference, in particular for controlling a robot, wherein said body is displaceable with respect to said fixed reference by motor means which are controlled by said device, said device comprising first means (4) to set the displacement direction of the movable body and second means (9, 10, 11) independent from said first means (4) for controlling the displacement speed of the movable body along the direction set by said first means (4), wherein said first means (4) serve for setting a translation direction of said movable body,
said device further comprising:
a control shuttle (4), which can be grasped by one hand, and which can be freely oriented in space, so as to identify one direction,
sensor means(14, 15) for sensing the orientation of the shuttle(4) with respect to a fixed reference,
at least one manual control member(9), preferably mounted on the shuttle(4), for setting the displacement speed of the movable body,
control means(13) for causing the displacement of said movable body along said direction identified by the shuttle (4) and at the speed set by said control member (9, 10, 11), and
a first slider (9) for controlling the forward translation speed along said set direction
characterized in that said device further comprises a support(2), said control shuttle (4) being rotatably mounted on said support (2) both around a first axis (6), or yaw axis, and around a second axis (7), or pitching axis intercepting the first axis (6) and orthogonal thereto, said device further comprising a second slider (10) for controlling the backward translation speed along said set direction, and a further control slider (11) for controlling the speed of rotation around said set direction.

2. Device according to claim 1, characterized in that said shuttle (4) is supported on said support (2) so as to be able to rotate by at least 360° around said first and second axes (6, 7).

3. Device according to claim 1, characterized in that the first and second sliders (9,10) are arranged at one end of the body of the shuttle (4) and said further slider (11) for controlling the speed of rotation is arranged on one side of said body.

4. Device according to claim 4, characterized in that each of said sliders determines a speed proportional to the displacement of this slider.

5. Device according to claim 1, characterized in that said support (2) is constituted by an appendage mounted on a robot programming terminal (25).

## Patentansprüche

1. Manuell betätigbare Einrichtung zur Steuerung der Bewegung eines bewegbaren Körpers bezogen auf eine feste Referenz, insbesondere zur Steuerung eines Roboters, wobei der Körper bezüglich der festen Referenz über Motoreinrichtungen bewegbar ist, die von der Einrichtung gesteuert werden, wobei die Einrichtung erste Einrichtungen (4) zur Einstellung der Richtung der Bewegung des bewegbaren Körpers besitzt und zweite, von den ersten Einrichtungen (4) unabhängige Einrichtungen (9, 10, 11) zur Steuerung der Geschwindigkeit der Bewegung des bewegbaren Körpers entlang der von den ersten Einrichtungen (4) eingestellten Richtung aufweist, wobei die ersten Einrichtungen (4) zur Einstellung einer Translationsrichtung des bewegbaren Körpers dienen,
wobei die Einrichtung weiterhin aufweist:
- ein Steuershuttle (4), welches durch eine Hand greifbar ist und im Raum zur Kennzeichnung einer Richtung frei ausrichtbar ist,
- Sensoreinrichtungen (14, 15) zur Erfassung der Richtung des Shuttles (4) bezogen auf eine feste Referenz,
- wenigstens eine Handsteuereinrichtung (9) für die Einstellung der Geschwindigkeit der Bewegung des bewegbaren Körpers, die vorzugsweise an dem Shuttle (4) angeordnet ist,
- eine Steuereinrichtung (13) zur Herbeiführung der Bewegung des bewegbaren Körpers entlang der Richtung, die durch das Shuttle (4) gekennzeichnet ist und mit der von der Steuereinrichtung (9, 10, 11) eingestellten Geschwindigkeit und
- ein erstes Schiebeelement (9) für die Steuerung der Geschwindigkeit der Translation nach vorne entlang der eingestellten Richtung,
dadurch gekennzeichnet, daß die Einrichtung weiterhin einen Träger (2) besitzt, wobei das Steuershuttle (4) an dem Träger (2) um sowohl eine erste Achse (6) oder Gierachse und um eine zweite Achse (7) oder Nickachse, die die erste Achse (6) schneidet und zu dieser orthogonal ist, drehbar angeordnet ist und die Einrichtung weiterhin ein zweites Schiebeelement (10) besitzt zur Steuerung der Geschwindigkeit der Translation nach hinten entlang der eingestellten Richtung und ein weiteres Steuerschiebeelement (11) für die Steuerung der Geschwindigkeit der Drehung um die eingestellte Achse aufweist.

2. Einrichtung nach Anspruch 1, dadurch gekennzeichnet, daß das Shuttle (4) an dem Träger (2) so abgestüzt ist, daß es um wenigstens 360 ° um die erste und zweite Achse (6, 7) drehbar ist.

3. Einrichtung nach Anspruch 1, dadurch gekennzeichnet, daß das erste und zweite Schiebeelement (9, 10) an einem Ende des Körpers des Trägers (4) angeordnet ist und das weitere Schiebeelement (11) zur Steuerung der Geschwindigkeit der Drehung an einer Seite des Körpers angeordnet ist.

4. Einrichtung nach Anspruch 4, dadurch gekennzeichnet, daß jedes der Schiebeelemente eine Geschwindigkeit proportional zur Bewegung dieses Schiebeelementes bestimmt.

5. Einrichtung nach Anspruch 1, dadurch gekennzeichnet, daß der Träger (2) von einer Verlängerung gebildet ist, die an einem Roboterprogrammierterminal (25) angeordnet ist.

## Revendications

1. Dispositif à commande manuelle pour contrôler le déplacement d'un corps mobile par rapport à une référence fixe et, en particulier, pour contrôler un robot, où ledit corps peut être déplacé par rapport à ladite référence fixe par des systèmes motorisés qui sont contrôlés par ledit dispositif, ledit dispositif comprenant en premier un système motorisé (4) pour régler la direction de déplacement du corps mobile et, en second, des systèmes (9, 10,11) indépendants par rapport au premier système susmentionné (4) pour contrôler la vitesse de déplacement du corps mobile le long de la direction fixée par le premier système susmentionné (4), où le susdit premier système (4) sert à régler une direction de translation dudit corps mobile,
ledit dispositif comprenant également :
un chariot de commande (4) qui peut être serré dans une main et qui peut librement être orienté dans l'espace de façon à identifier une direction,
des capteurs (14, 15) pour détecter l'orientation du chariot (4) par rapport à une référence fixe,
un équipement de commande manuelle (9) au moins, monté de préférence sur le chariot (4), pour fixer la vitesse de déplacement du corps mobile,
un système de commande (13) pour lancer le déplacement dudit corps mobile le long de ladite direction identifiée par le chariot (4) et à la vitesse réglée par ledit système de commande (9, 10, 11)
et une première luge (9) pour contrôler la vitesse de translation en avant le long de ladite direction fixée
caractérisé par le fait que ledit dispositif comprend également un support (2), ledit chariot de commande (4) étant monté dans une position tournante sur ledit support (2) autour d'un premier axe (6) ou de l'axe vertical et autour d'un deuxième axe (7), ou de l'axe horizontal en interceptant le premier axe (6) et orthogonal, ledit dispositif comprenant également une deuxième luge (10) pour contrôler la vitesse de translation en marche arrière le long de ladite direction fixée et une autre luge de commande (11) pour contrôler la vitesse de rotation autour de ladite direction fixée.

2. Dispositif selon la revendication 1, caractérisé par le fait que ledit chariot (4) est posé sur ledit support (2) de sorte qu'il puisse tourner de 360° au moins autour desdits premier et deuxième axes (6, 7).

3. Dispositif selon la revendication 1, caractérisé par le fait que les première et deuxième luges (9, 10) sont placées à l'une des extrémités du corps du chariot (4) et que ladite luge supplémentaire (11), servant à contrôler la vitesse de rotation, est placée sur l'un des côtés dudit corps.

4. Dispositif selon la revendication 4, caractérisé par le fait que chacune desdites luges établit une vitesse proportionnelle au déplacement de cette luge.

5. Dispositif selon la revendication 1, caractérisé par le fait que ledit support (2) est constitué d'un accessoire monté sur un terminal de programmation robot (25).
